Europäisches Patentamt

European Patent Office

Office européen des brevets

(19)

(11) Publication number: **0 237 779 B1**

# EUROPEAN PATENT SPECIFICATION

(12)

(45) Date of publication of patent specification: **27.12.91**    (51) Int. Cl.⁵: **A23P 1/00**

(21) Application number: **87101918.8**

(22) Date of filing: **11.02.87**

(54) **Unit dosage delivery device.**

(30) Priority: **18.02.86 US 831017**

(43) Date of publication of application:
**23.09.87 Bulletin  87/39**

(45) Publication of the grant of the patent:
**27.12.91 Bulletin  91/52**

(84) Designated Contracting States:
**AT BE CH DE ES FR GB GR IT LI NL SE**

(56) References cited:
**DE-A- 2 251 965**      **FR-A- 1 369 692**
**FR-A- 2 131 947**      **NL-C- 91 833**
**US-A- 3 312 555**      **US-A- 3 620 770**
**US-A- 3 717 476**

(73) Proprietor: **THE NUTRASWEET COMPANY (a Delaware corporation)**
**1751 Lake Cook Road**
**Deerfield Illinois 60015(US)**

(72) Inventor: **Tsau, Josef Heng-ko**
**5348 Brummel St.**
**Skokie, Il. 60077(US)**

(74) Representative: **Beil, Hans Chr., Dr. et al**
**Beil, Wolff und Beil, Rechtsanwälte Adelonstrasse 58 Postfach 80 01 40**
**W-6230 Frankfurt am Main 80(DE)**

EP 0 237 779 B1

## Description

INTRODUCTION

The manufacture of typical solid unit dosage compositions, such as tablets and capsules containing one or more active ingredients, requires sophisticated equipment operating at high speed, as well as substantial capital investment. In addition, various excipients are incorporated with the active ingredient in order to increase the volume of a unit dose composition to a manageable size, and/or provide other properties to the composition such as binding, lubricating, disintegrating, dissolution rate enhancing, and flow character. Because each active ingredient has its own particular physical and chemical properties, dosage formulations and manufacturing techniques must be developed for each active ingredient. The development of dosage formulations and related manufacturing processes is a major expenditure of pharmaceutical manufacturers and research organizations. For example, in order to develop a tablet formulation, many tedious processes, such as milling, sizing, micronizing, and granulating, are often required to pre-treat raw materials and powder mixes. An acceptable tablet formulation must produce tablets having acceptable stability, content uniformity, disintegration and dissolution rates. Also the powder mix must have specific physical properties in order to process the formulation using high speed tableting equipment. In addition, the use of excipients reduces stability, bio-availability and dissolution rate of drugs.

The DE-A 22 51 965 describes a device for dispensing a comestible product into a liquid having an exterior and an interior wall and the product having a porous lattice structure. The product is obtained by drying a concentrated solution of an artificial sweetener and subsequently placing it in or on dispensing means.

It is objected of the present invention to provide a process for preparing a device for dispension an excipient-free comestible product into a liquid and a unit dosage form of a comestible product.

SUMMARY OF THE INVENTION

The present invention relates to a process for preparing a device for dispensing a comestible product into a liquid.

Said process comprises dissolving a comestible product in a suitable solvent and crystallizing the comestible product in a dispensing means having an exterior wall and interior wall and at least one opening, allowing the comestible product to crystallize within the dispensing means in the form of porous lattice structure having a shape defined by the interior wall of said dispension means.

The unit dose delivery device of the present invention is particularly useful for providing measured quantities of an active ingredient to a solution.

DETAILED DESCRIPTION OF THE INVENTION

Figure 1 is an elevational view of a cylindrical unit dose delivery device being prepared in accordance with the present invention;

Figure 2 is a central sectional elevation of the device of Figure 1, taken along plane 2-2 of Figure 1;

Figure 3 is a horizontal sectional view of the device of Figure 1, taken along plane 3-3 of Figure 1.

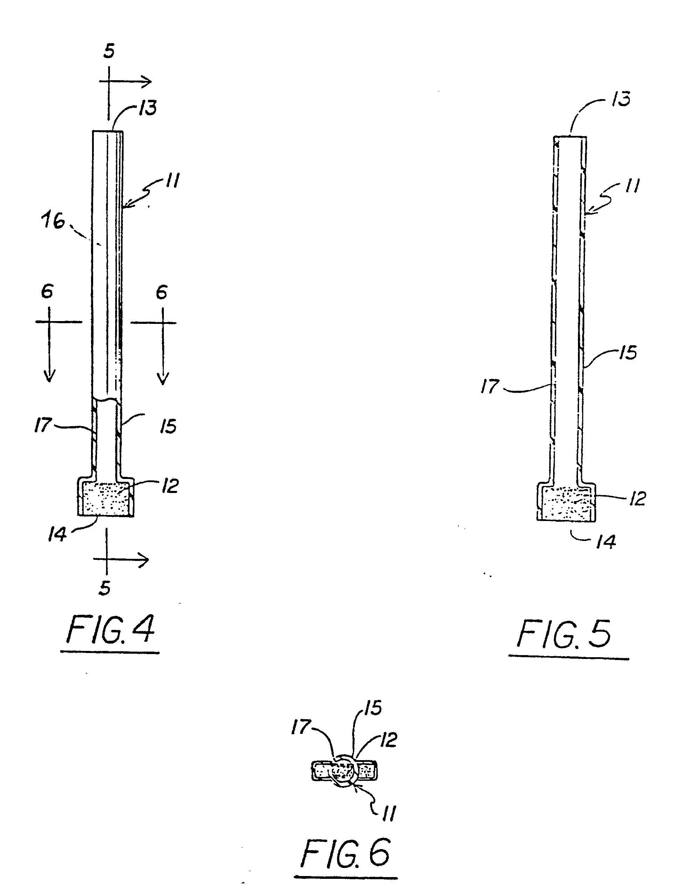

Figure 4 is an elevational view of a further embodiment of a unit dose delivery device being prepared according to the present invention.

Figure 5 is a central sectional view of the device of Figure 4, taken along plane 5-5 of Figure 4.

Figure 6 is a horizontal sectional view of the device of Figure 4, taken along plan 6-6 of Figure 4.

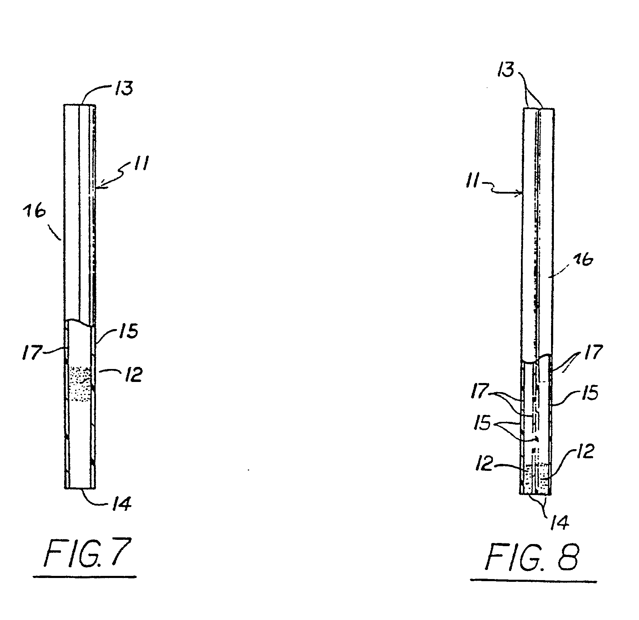

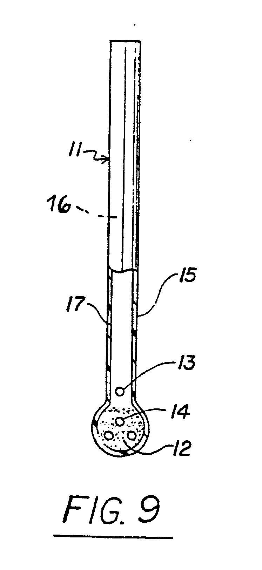

Figures 7-9 are elevational views of further embodiments of unit dose devices.

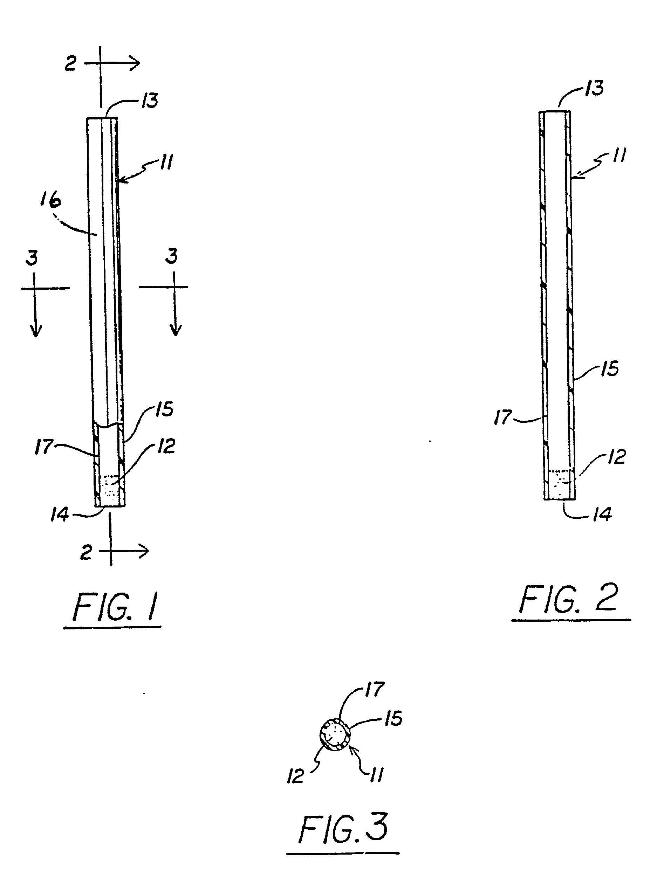

In Fig. 1, numeral (11) represents a device capable of dispensing a comestible product into a liquid. It comprises a dispensing means (16) having an exterior wall (15) and an interior wall (17) and two openings (13, 14) and disposed within the dispensing means (16) is a comestible product (12) in the form of a porous lattice structure having a shape defined by the interior wall (17). The dispensing means (16) may be made of paper or synthetic organic plastic or other suitable material. The shape of the dispensing means (16) is not overly critical, although it is preferred to employ a dispensing means (16) having a cylindrical shape. The dispensing means (16) has an exterior wall (15) and interior wall (17) in communication with two openings ((13) and (14)). The comestible product (12) disposed within the dispensing means (16) has a porous lattice structure defined by the interior wall (17) of the dispensing means (16). The comestible material may be dispensed into a liquid into which the device (11) is placed by stirring the device (11), or allowing liquid to penetrate the porous lattice structure of the comestible material.

The devices as prepared according to the present invention comprises a dispensing means having at least two openings wherein at least one of the openings being communicable with the liquid in which said device is placed.

The devices may be prepared by:

i) preparing a solution of a comestible product in an appropriate solvent at a temperature sufficient to allow the comestible product to dissolve in the solvent;

ii) placing a measured amount of the solution into a dispensing means comprising an exterior wall and an interior wall and having at least one opening;

iii) allowing the solution to cool in the dispensing means at a rate sufficient to allow crystallization of the comestible product within the dispensing means in a porous lattice structure defined by the interior walls of the dispensing means;

iv) removing excess solvent from the porous lattice structure disposed within the dispensing means.

The comestible products employed herein includes for example edible foods or food additives or pharmaceutical agents which crystallizes in essential a pure porous lattice structured form. Illustrative of edible foods or food additives include sweeteners such as aspartyl-L-phenylalanine methyl ester and salts thereof, saccharin, cyclamate, and acesulfam K.

Representative of the pharmaceutical agents include for example, aspirin, spironolactone and vitamins.

The comestible product must be compatible with a solvent wherein the comestible product will essentially dissolve and subsequently crystallize in a porous lattice structure. In one embodiment, the comestible product is dissolved in a solvent wherein the comestible product is insoluble at lower temperatures, but soluble at elevated temperatures. Therefore, heating a solution containing the comestible product in such a solvent system will dissolve the comestible product in the solvent system. Subsequent cooling of the solution within a dispensing means will permit the comestible product to crystallize in the form of a porous lattice structure having a shape defined by the interior wall of the dispensing means. It should be noted that the porous lattice structure thus formed contains essentially pure comestible product. The excess solvent is removed by conventional techniques. Thus, the preparation of the devices according to the present invention may be utilized as the final purification step in the preparation of a comestible product.

The solvent or mixtures of solvents employed as the solvent system utilized to prepare the devices according to the present invention vary with each active ingredient and are readily ascertained by one of ordinary skill in the art. For example, the preferred solvent for preparing devices containing aspartame is hot water or a hot water-alcohol solution, such as a hot water-methanol solution. The preferred solvent for preparing devices containing aspartame sulfate is a water-alcohol solution containing a ratio of water/alcohol in the range of from about 1:25 to 1:5. The preferred solvent for preparing devices containing sodium saccharin is a mixture of water:methanol:isopropanol in a ratio of from about 2:2:40 to 6:5:80.

In addition, the devices of the present invention may be prepared utilizing a two solvent system. The comestible product is dissolved in the first solvent. To the resulting solution is added a second solvent which is miscible with the first solvent but wherein the comestible product is insoluble. The resulting mixture is placed within a suitable dispensing means and the comestible product will crystallize in the form of a porous lattice structure having a shape defined by the interior wall of the dispensing means.

In accordance with the present invention solutions containing from 4 to 40% by weight of a comestible product in a solvent system may be employed.

The device as prepared according to the present invention may be utilized to dispense one or more comestible products into a liquid. The preparation of a device containing two or more comestible products is accomplished using techniques such as, for example, co-precipitation, entrapment of a second comestible product within the porous lattice structure of the first comestible product or addition of a solution of the second comestible product to the porous lattice structure formed by the first comestible product followed by removal of the solvent. The term "co-precipitation" as used herein includes dissolving multiple comestible products in a solvent system and then allowing the comestible products to simultaneously form a porous lattice structure within the dispensing means. Entrapment of a second comestible product within the porous lattice structure formed by a first comestible product is accomplished by adding the second comestible product to a solution comprising the first comestible product dissolved in a solvent system wherein the second comestible product is insoluble. Therefore, as the first comestible product crystallizes, the second comestible product which is insoluble in the solvent becomes entrapped within the resulting porous lattice structure. A third method for incorporating a second comestible product within the device of the present invention, is to add a solution containing the second comestible product in a solvent wherein the first comestible product is insoluble, to the porous lattice structure formed by the first comestible product and subsequently removing the solvent.

The porous lattice structure characteristics of the comestible product disposed within the dispensing means is utilized to replace the bulking effect of excipients. For example, the density of aspartame and aspartame sulfate in a porous lattice structure as in the present invention is within a range of from about 0.07-0.2g/cc.. Thus the porous lattice structures utilized in the present invention are about 5 to 30 times bulkier than conventional compressed tablets containing aspartame or aspartame sulfate whose densities are often greater than 1.0g/cc.

A comestible product having a porous lattice structure has an increased surface area and dissolution rate when compared to a comestible product in a conventional unit dose form, such as tablets. For example, aspartame sulfate in the form of a porous lattice structure dissolves extremely fast with respect to conventional compressed tablets containing aspartame sulfate.

An additional advantage of the new dosage forms of the present invention is that the dosage forms are essentially excipient free. This provides significant advantages over conventional dosage forms and in particular allows the new dosage forms to be utilized in formulations requiring high dissolution rate, stability or increased bioavailability.

In addition, the comestible product in the form of a porous lattice structure may be removed from the dispensing means and utilized as a unit dose tablet or the like. If employed in this manner, it is preferred to remove the porous lattice structure prior to removing excess solvent. If a pure form of a comestible product as a porous lattice structure is too fragile for handling, surface spraying the porous lattice structure with a binder solution, such as a 5% PVP alcohol solution, may reduce this problem.

As used herein, the term "dispensing means" refers to a structure capable of dispensing or delivering a comestible product disposed therein in a liquid.

The cross-sections of the dispensing means may be modified so as to be of different geometric shapes, e.g., hexagonal, fluted, triangular, star-shaped, etc. The dispensing means, if tubular in shape, may have plugs inserted, molded or pressed in to block off the comestible product from the ends of the dispensing means. In addition the comestible product may be covered over with sealing means which do not cover the entire device, e.g., pressure sensitive tapes, to further protect them.

The preferred materials of construction of the dispensing means are plastics. These may be molded or extruded in the shapes illustrated, with perforations, crimps, projections, grooves, slots, and undercuts, or may be produced in tubular or rod form and the desired configurations may be subsequently made by piercing, perforating, cutting, routing, etc. Also modifications of the illustrated structures can be employed. However, for ease of manufacture and cost effectiveness a cylindrical form is preferred. Although paper may be used, when employed it is preferably treated with plastic or other material to improve wet strength of the device. Almost all non-toxic thermoplastic or thermosetting synthetic organic polymers are useful, but, as a practical matter, with respect to ease of manufacture and economic considerations, the most important of these are polypropylene and polyethylene, both of which can be made with and processed by high speed extrusion, perforating and filling equipment. Such plastics may be made transparent or translucent and the user of the device is able to detect the extent to which active ingredient had been consumed.

The following examples are provided to further demonstrate the principles and the applications of this invention.

EXAMPLE 1. Aspartame Sulfate Stirrer

One end of commercial plastic straws (10" long x 0.25" dia.) were heat-sealed at a ~45° angle and cut open a small hole at the tip. An aspartame sulfate solution was prepared by dissolving 10.0 g of aspartame (~96% pure) in a warm solution containing 1.667 g sulfuric acid (96% pure) in 10 ml distilled water. To the resulting soluton was added 100.0 ml of cold ethanol and the resulting solution was mixed. The straws were immersed into the solution. Aspartame sulfate began to crystallize within each straw within 30 seconds. After about 30 minutes, the straws were removed from the solution and placed on absorbent paper to drain the solvent and allow the aspartame sulfate which had crystallized in the form of a porous lattice structure to dry. The devices thus prepared were effective in delivering aspartame sulfate into cold solutions.

EXAMPLE 2. Preparation of Aspartame Sulfate "Tablets"

Plastic straws, (10" long x 0.25" diameter), were used. An aspartame sulfate solution was prepared using the procedure given in Example 1. The straws were bound together with two rubber bands and immersed into an aspartame sulfate solution as soon as the solution is prepared. After 30 minutes the straws were removed from the solution and place on absorbent paper to remove part of the solvent. The aspartame sulfate that had crystallized in the form of a porous lattice structure was pressed to desired thickness, pushed out of the straw using a plunger. The wet "tablet" thus prepared was dried on an absorbent paper. A binder solution, 5% PVP in alcohol, was sprayed on the tablets and the tablets were allowed to air dry. The tablets thus obtained dissolve rapidly in cold beverages.

EXAMPLE 3. Preparation of Aspartame "Tablets"

The procedure of Example 2 is followed except that an aspartame solution, prepared by dissolving 7.0 g of aspartame in 100 ml hot distilled water, was used in lieu of aspartame sulfate solution. The aspartame crystallized in the form of a porous lattice structure within the straws in approximately two (2) hours. In cold water the aspartame tablets thus produced disintegrate quickly upon stirring and dissolve faster than powder aspartame.

EXAMPLE 4. The Density of Unit Dose "Tablets"

1) Aspartame Sulfate Tablet - A pure aspartame sulfate tablet obtained from Example 2, neither compressed nor coated with PVP, has a size of 11 mm long x 5.5 mm diameter and weighs 23 mg. Therefore its density is 0.088g/cc. An aspartame sulfate tablet coated with PVP has a size of 9 mm long x 5.5 mm diameter and weighs 25 mg. Therefore its density is 0.12g/cc.
2) Aspartame Tablet - A pure aspartame tablet obtained from Example 3, neither compressed nor coated with PVP, has a size of 10 mm long x 5.5 mm diameter and weigh 22 mg. and a density of 0.093g/cc.

EXAMPLE 5. Sodium Saccharin Stirrer

Sodium saccharin, (4.0 g), was dissolved in 4.0 ml of distilled water and 3.0 ml of methanol. The resulting solution was heated to about $60°$C. To the solution was added isopropylalcohol, preheated to about $65°$C, until a volume of 60 ml was attained. The resulting solution was mixed and a total of 100 straws, 130mm long x 3mm diameter, were inserted into the solution. Upon cooling, sodium saccharin crystallizes within the straws in the form of fluffy needle crystals having a porous lattice structure. After the solution was cooled to room temperature, the straws were removed and placed on an absorbent paper to drain the solvent. The straws were air dried overnight. The sodium saccharin crystallized within the straws dissolves instantly in cold water.

EXAMPLE 6. Aspartame Stirrer

10.0g of aspartame was dissolved in 100ml of hot water. Plastic straws (4mm i.d.) held together with rubber bands were dipped into the aspartame solution as soon as aspartame starts to crystallize. Crystallization of the aspartame within the straws in the form of a porous latice structure was completed by cooling the solution to about $40°$C and then to $5°$C. The straws were removed from the solution and vertically placed on absorbent paper to drain remaining solution. The wet straws were then dried in a vacuum oven at $50°$C overnight.
In hot drinks such as coffee and tea the stirrer straw containing aspartame released aspartame rapidly.

EXAMPLE 7. Flavored Aspartame And Aspartame Sulfate Stirrers

The following solutions were prepared:
1. 2.50g citric acid and 0.50g artificial lemon-lime flavor #576 (Felton) were dissolved in 22.0g of absolute ethanol.
2. 2.50g citric acid and 0.50g artificial orange oil California type #430 (Felton) were dissolved in 22.0g of absolute ethanol.
3. 2.50g citric acid and 0.50g artificial cherry flavor #306 (Felton) were dissolved in 22.0g absolute ethanol.
Six drops of one of the above solutions were added to an aspartame tablet prepared according to Example 3 or an aspartame sulfate tablet prepared according to Example 2. The tablet was placed on a metal screen. Alternatively the above solutions may be added to aspartame sulfate stirrer of Example 1 through the empty end of the stirrer. The wet dosage forms thus prepared were then dried in a vacuum oven. When these flavored dosage forms were dissolved in cold water, the resulting solution had a sweet, flavored taste.

EXAMPLE 8: Aspartame and Saccharin Combination Stirrer

Sodium saccharin (4.0g) was dissolved in a mixture of 3.0ml methanol and 4.0ml of water. Aspartame powder (5.0g) was added to this solution and the resulting solution was mixed. A boiling solution of isopropanol (80ml) was added to the solution and the resulting mixture was agitated to dispense undissolved aspartame into a homogeneous suspension. About 100 plastic drinking straws of 5 1/2 inches long x 4mm inside diameter bonded by a rubber band were inserted into the mixture. The mixture containing the straws was cooled to room temperature and then to below 0°C. The solvent within the straws was removed by vacuum filtration. A 10% PVP isopropanol solution was sprayed on the end of the straw wherein the aspartame and saccharin had crystallize in the form of a porous latice structure and the straws were air dried. The aspartame:saccharin product thus prepared dissolves quickly in cold water.

EXAMPLE 9: Calcium Cyclamate And Sodium Cyclamate Combination Stirrer

The stirrers of this example were prepared in accordance with the same procedure of Example 10 except that:
1. A solution containing 20.0g of calcium cyclamate, dissolved in a hot solution containing 20.0ml water and 80ml of ethanol was utilized.
2. A solution containing 20.0g of sodium cyclamate dissolved in a hot solution containing 30ml water and 70ml of ethanol.
The solutions were to cool to a temperatures below 0°C to precipitate the sweeteners in stirrers. The solvents were then removed by vacuum filtration.

EXAMPLE 10: Sodium Cyclamate And Aspartame Combination Stirrer

The same procedure used in Example 8 was utilized employing a solution containing 5.0g of sodium cyclamate and 5.0g of aspartame dissolved in a hot solution containing 20ml water and 80ml ethanol. The sodium cyclamate and aspartame were co-precipitated within a straw at a temperature of less than 0°C, and the remaining solvent was removed by vacuum filtration.

EXAMPLE 11 Content Uniformity of A Pure Aspartame Sulfate Unit Dose

Empty capsule and tablet unit dose blisters having five small holes drilled on both the top and bottom of each blister were utilized as the dispensing means. An aspartame sulfate solution was prepared by dissolving 1.66 g of sulfuric acid (96%) and 10.0 g of aspartame (96% pure) in 20 ml warm distilled water. The aqueous solution was added to 250 ml of ethanol preheated to 60°C.

The blisters were completely immersed within the hot aspartame sulfate solution. Upon cooling of the solution, aspartame sulfate crystallizes in the form of a porous lattice structure. Following crystallization of the aspartame sulfate in the form of a porous lattice structure, the blisters were recovered, cleaned, and the solution remaining within the blisters was removed. The blisters were then air dried. Each blister was analyzed to determine aspartame content ("APM Content") and content uniformity. The results obtained are illustrated in Table I.

## Table I

| SAMPLE I. D. | | | APM CONTENT (mg/dose) |
|---|---|---|---|
| Tablet blister | " | 1 | 24.8 |
| " | " | 2 | 25.4 |
| " | " | 3 | 25.0 |
| " | " | 4 | 24.6 |
| " | " | 5 | 23.8 |
| " | " | 6 | 23.8 |
| " | " | 7 | 26.1 |
| " | " | 8 | 26.1 |
| " | " | 9 | 24.5 |
| " | " | 10 | 24.8 |
| " | " | 11 | 23.3 |
| " | " | 12 | 23.6 |
| " | " | 13 | 24.3 |
| " | " | 14 | 24.0 |
| " | " | 15 | 25.5 |
| Capsule Blister | " | 1 | 42.7 |
| " | " | 2 | 41.7 |
| " | " | 3 | 42.9 |
| " | " | 4 | 44.1 |
| " | " | 5 | 41.2 |
| " | " | 6 | 41.7 |

EXAMPLE 12. Content Uniformity of Pure Spironolactone Containing Unit Dose Devices

Spironolactone (10.0 g.) was dissolved in 300 ml of hot methanol at a temperature of approximately 65° C. A total of 10 unit dose capsule blisters with small holes were immersed in the hot methanol solution allowing the capsule blisters to fill with the hot solution. On cooling, spironolactone crystallizatized in the form of long needle crystals. Following crystallization of the spironolactone the solution remaining within the blisters was removed and the blisters were dried. The spironolactone content uniformity of the blisters was determined and results are illustrated in the following Table:

Table II

| SAMPLE | SPIRONOLACTONE CONTENT (mg/dose) |
|---|---|
| 1. | 64.8 |
| 2. | 65.5 |
| 3. | 63.6 |
| 4. | 64.3 |
| 5. | 63.4 |
| 6. | 63.2 |
| 7. | 65.0 |
| 8. | 63.5 |
| 9. | 63.9 |
| 10. | 63.8 |

## Claims

1. A process for preparing a device for dispensing a comestible product comprising:
   i) preparing a solution of a comestible product in an appropriate solvent at a temperature sufficient to allow the comestible product to dissolve in the solvent;
   ii) placing a measured amount of the solution into a dispensing means comprising an exterior wall and an interior wall and having at least two openings;
   iii) allowing the solution to cool in the dispensing means at a rate sufficient to allow crystallization of the comestible product within the dispensing means in a porous lattice structure defined by the interior walls of the dispensing means;
   iv) removing excess solvent from the porous lattice structure disposed within the dispensing means.

2. A process according to Claim 1 wherein the dispensing means is a tubular stirrer having an opening at the top and bottom.

3. A process according to Claim 2 wherein the comestible product crystallizing within the dispensing means is a sweetener.

4. A process according to Claim 3 wherein the sweetener is one or more sweeteners selected from the group consisting of aspartame, saccharin, cyclamate, acesulfam K or salts thereof.

5. A process according to Claim 4 wherein the sweetener is aspartame or salts thereof.

6. A process according to Claim 5 wherein the sweetener is aspartame sulfate.

7. A process according to Claim 5 wherein the sweetener is aspartame.

8. A unit dose form of a comestible product prepared by removing a porous lattice structure from a device prepared in accordance with Claim 1.

## Revendications

1. Un procédé pour préparer un dispositif pour distribuer un produit comestible comprenant tes étapes suivantes :
   i) on prépare une solution d'un produit comestible dans un solvant approprié à une température suffisante pour que le produit comestible se dissolve dans le solvant ;
   ii) on place une quantité mesurée de la solution dans un moyen distributeur comprenant une paroi extérieure et une paroi intérieure et ayant au moins deux ouvertures ;
   iii) on laisse refroidir la solution dans le moyen distributeur à une vitesse suffisante pour permettre la cristallisation du produit comestible dans le moyen distributeur en une structure réticulaire poreuse définie par la paroi intérieure du moyen distributeur ;
   iv) on sépare l'excès de solvant de ladite structure réticulaire poreuse disposée dans le moyen distributeur.

2. Un procédé selon la revendication 1, dans lequel le moyen distributeur est un agitateur tubulaire ayant une ouverture en haut et en bas.

3. Un procédé selon la revendication 2, dans lequel le produit comestible cristallisant dans le moyen distributeur est un édulcorant.

4. Un procédé selon la revendication 3, dans lequel l'édulcorant est un ou plusieurs édulcorants choisis parmi l'aspartame, la saccharine, le cyclamate, l'acésulfame K ou leurs sels.

5. Un procédé selon la revendication 4, dans lequel l'édulcorant est l'aspartame ou ses sels.

6. Un procédé selon la revendication 5, dans lequel l'édulcorant est le sulfate d'aspartame.

7. Un procédé selon la revendication 5, dans lequel l'édulcorant est l'aspartame.

8. Une forme de dose unitaire d'un produit comestible préparée en retirant une structure réticulaire poreuse d'un dispositif préparé selon la revendication 1.

**Patentansprüche**

1. Verfahren zur Herstellung einer Vorrichtung zum Verteilen eines Lebensmittels, umfassend die Schritte:
   i) eine Lösung eines Lebensmittels in einem geeigneten Lösungsmittel und bei einer Temperatur herstellen, die ausreicht, um das Produkt im Lösungsmittel aufzulösen;
   ii) eine abgemessene Menge der Lösung in ein Mittel zum Verteilen geben, welches eine äußere und eine innere Wand sowie wenigstens zwei Öffnungen umfaßt;
   iii) die Lösung in dem Mittel zum Verteilen mit einer Geschwindigkeit abkühlen lassen, die ausreicht, um eine Kristallisation des Lebensmittels innerhalb des Mittels zum Verteilen in einer porösen Gitterstruktur, welche durch die inneren Wände des Mittels zum Verteilen definiert ist, zu erlauben;
   iv) das überschüssige Lösungsmittel aus der porösen Gitterstruktur, die innerhalb des Mittels zum Verteilen angeordnet ist, entfernen.

2. Verfahren gemäß Anspruch 1, worin das Verteilungsmittel ein röhrenförmiger Rührer mit einer Öffnung an der Spitze und am Boden ist.

3. Verfahren gemäß Anspruch 2, worin das Lebensmittel, welches im Verteilungsmittel kristallisiert, ein Süßstoff ist.

4. Verfahren gemäß Anspruch 3, worin der Süßstoff ein oder mehrere Süßstoffe, ausgewählt aus der Gruppe, bestehend aus Aspartam, Saccharin, Cyclamat, Acesulfam K oder deren Salze, ist.

5. Verfahren gemäß Anspruch 4, worin der Süßstoff Aspartam oder dessen Salze ist.

6. Verfahren gemäß Anspruch 5, worin der Süßstoff Aspartamsulfat ist.

7. Verfahren gemäß Anspruch 5, worin der Süßstoff Aspartam ist.

8. Eine Einheitsdosierungsform eines Lebensmittels, hergestellt durch Entfernen einer porösen Gitterstruktur aus einer gemäß Anspruch 1 hergestellten Vorrichtung.

FIG. 1

FIG. 2

FIG. 3

*FIG.4*

*FIG.5*

*FIG.6*

FIG. 7

FIG. 8

FIG. 9